# EUROPEAN PATENT APPLICATION

(11) **EP 3 855 840 A1**
(43) Date of publication of application: **28.07.2021**
(21) Application number: 21153885.5
(22) Date of filing: 27.01.2021
(51) Int. Cl.: H04W 72/04, H04W 72/12, H04W 24/02

(54) **METHOD AND APPARATUS FOR ORTHOGONAL RESOURCE ALLOCATION IN A WIRELESS COMMUNICATION SYSTEM**

(30) Priority: 27.01.2020 US 202062966126 P; 31.12.2020 US 202017138958
(71) Applicant: Sterlite Technologies Limited, Haryana 122002 (IN)
(72) Inventor: PAREKH, Shyam, California, 94563 (US); TANG, Kevin, California, 94568 (US); RAVINDRAN, Ravishankar, California, 94582 (US)
(74) Representative: Hepworth Browne

(57) **Abstract**

A method and an apparatus for providing dynamic orthogonal assignment of radio resources in a wireless communication system (1000) is disclosed. The method includes receiving a dynamic spectrum sharing (DSS) policy configuration message from a second controller (200) and receiving a physical resource block (PRB) assignment bitmap proposal and a protected bitmap indication data from a type one network scheduler (600) and a type two network scheduler (700). The method includes computing an available bandwidth based on the PRB assignment bitmap proposal and the protected bitmap indication data and further computing a bandwidth allocation for the type one network scheduler and the type two network scheduler based on the computed available bandwidth and the DSS policy configuration message from the type one network scheduler and the type two network scheduler. Lastly, the method includes allocating the computed bandwidth to the type one network scheduler and the type two network scheduler.

## Description

### BACKGROUND OF THE INVENTION

### Field of the Invention.

The present disclosure relates to a wireless communication system, and more specifically, relates to an orthogonal resource allocation in a wireless communication system with bitmap expression.

### Description of Prior Art

The increase in demand of mobile customers for efficient and reliable connectivity (i.e., improved network) is continuously evolving and hence cellular operators (also referred as mobile network operators (MNOs) encompassing different radio access technologies (RATs)) desire to meet the mobile customers demand by ensuring uninterrupted services with quality and efficiency. On the other hand, in order to meet this desire, the cellular operators require a favourable balance among customer experience and satisfaction, network performance, and costs.

One way to improve performance and reduce their capital and operating costs is to share resources/bandwidth between the different RATs. That is, a same RAT is unlikely to use all of its resources all the time. Therefore, there is an opportunity for different RATs operating in a given geographical area to pool in some of their respective resources to achieve greater overall efficiency.

In general, Dynamic spectrum sharing (DSS) has been cited as one of the promising mechanism for managing the radio spectrum for coexisting systems (such as 3G, 4G and 5G). The goal of the DSS is to increase the performance of networks in the shared spectrum by providing a more efficient way of utilisation, which thereby outperforms fixed spectrum allocation (FSA). The DSS allows both 4G and 5G RATs to simultaneously operate within the same spectrum in time and space using a long term evolution (LTE) medium access controller (MAC) scheduler and a New Radio (NR) MAC scheduler. This requires a mechanism to synchronize the LTE MAC scheduler and the NR MAC scheduler, so that they don't interfere with each other's resource assignment over a time-frequency grid. Further, 3^{rd} generation partnership project (3GPP) has extended an X2 protocol to support the DSS, where a MAC can exchange scheduling information to avoid interference. Further, the resources are allocated dynamically between the 4G and 5G technologies based on device distribution and capacity requirements. However, the DSS operates in either distributed fashion and/or in a centralized approach.

The DSS operating in distributed fashion within individual base stations (BSs) lacks wider view of the traffic dynamics of multiple cells, and fails to cover or work well with all deployment scenarios (e.g., non-co-located 4G/5G cells, or with UEs moving through multiple cells). That is, in the distributed fashion, the schedulers can estimate the future workload and propose allocation of the radio resources. In order to avoid large delay during the allocation, one of the Medium access control (MAC) layer can be a master node. But this approach may incur multiple round-trip times (RTTs) and may not be fair. Thus, the actual latency depends on the latency on an X2 interface, which in turn depends on control unit/ distributed unit (CU/DU) deployment scenarios, e.g., edge vs center, co-sited vs non co-sited, etc.

In the centralized approach, a logically centralized function can be realized, that is provided with the expected current and future workload. In this, the logically centralized function decides the bandwidth and bit vector allocation. However, the latency in this approach can be comparable to that of the distributed approach, depending on the actual CU/DU deployment scenarios. Also, considering that the DSS is a vendor proprietary and built-in feature of the 4G/5G MAC schedulers at next generation Node-B (gNB)/ evolved Node-B (eNB) may lead to interoperability issues for the cellular operators who use the BSs from multiple vendors.

Thus, it is desired to address the above mentioned disadvantages.

### SUMMARY OF THE INVENTION

The principal object of the invention herein is to provide dynamic orthogonal resource (e.g., PRBs) assignment in a wireless communication system, with bitmap expression. Specifically, the principal object of the invention herein is to provide a method and an apparatus (in the first controller) for allocating radio resource (PRBs) between multiple radio access technologies (such as long term evolution (LTE) system (i.e., fourth generation (4G) system) and a New Radio system (i.e., Fifth generation (5G) system)) using a physical resource block (PRB) bitmap based on at least one of spectrum sharing portion policy from the second controller, bandwidth split/allocation from bandwidth allocation unit of the first controller, bandwidth demand estimation for schedulers from AI/ML unit of the first controller, a request bitmap indicating proposed PRB assignment and a protected bitmap indicating the protected RE in PRBs from schedulers of the multiple radio access technologies.

Another object of the invention herein is to assign PRBs, using bit vectors format, between the multiple radio access technologies in a centralized manner.

Accordingly, the present invention discloses a method for providing dynamic orthogonal assignment of radio resources in a wireless communication system. The wireless communication system comprises a radio access network (RAN) having a plurality of network nodes. The plurality of network nodes comprising at least a type one network scheduler and a type two network scheduler. The method includes receiving a dynamic spectrum sharing (DSS) policy configuration message by a first controller from a second controller. The DSS policy configuration message is a resource allocation proportion between the type one network scheduler and the type two network scheduler. Further, the method includes receiving estimation of bandwidth demand for type one network scheduler and the type two network scheduler by the first controller. Further, the method includes receiving a physical resource block (PRB) assignment bitmap proposal and a protected bitmap indication data by the first controller from the type one network scheduler and the type two network scheduler. Furthermore, the method includes computing available radio resources based on the PRB assignment bitmap proposal and the protected bitmap indication data received by the first controller and computing a resource assignment for the type one network scheduler and the type two network scheduler based on the computed available radio resources, the DSS policy configuration from the second controller, estimation of the bandwidth demand, for the type one network scheduler and the type two network scheduler.

The apparatus is the first controller. The first controller is configured to receive the dynamic spectrum sharing (DSS) policy configuration message from the second controller, receive estimation of bandwidth demand for type one network scheduler and the type two network scheduler and receive the physical resource block (PRB) assignment bitmap proposal and the protected bitmap indication data from the type one network scheduler and the type two network scheduler. The first controller computes available radio resources based on the PRB assignment bitmap proposal and the protected bitmap indication data and computes the resource assignment for the type one network scheduler and the type two network scheduler based on the computed available radio resources and the DSS policy configuration message from the second controller. Accordingly, the first controller allocates the computed resource (PRBs) assignment to the type one network scheduler and the type two network scheduler.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF DRAWING

The invention is illustrated in the accompanying drawings, throughout which like reference letters indicate corresponding parts in the various figures. In order to best describe the manner in which the above-described embodiments are implemented, as well as define other advantages and features of the disclosure, a more particular description is provided below and is illustrated in the appended drawings, understanding that these drawings depict only exemplary embodiments of the invention and are not therefore to be considered to be limiting in scope, the embodiments herein will be better understood from the following description with reference to the drawings, in which:
FIG. 1 illustrates an architecture of a wireless communication system.
FIG. 2 illustrates a radio intelligent controller (RIC) architecture of FIG. 1.
FIG. 3 illustrates various hardware elements in a Near-RT-RIC.
FIG. 4 is a flow chart illustrating a method for dynamic allocation of radio resources in the wireless communication system.
FIG. 5 is a sequence diagram depicting dynamic allocation of the radio resources in the wireless communication system.

It should be noted that the accompanying figures are intended to present illustrations of few exemplary embodiments of the present disclosure. These figures are not intended to limit the scope of the present disclosure. It should also be noted that accompanying figures are not necessarily drawn to scale.

### REFERENCE NUMERALS IN THE DRAWINGS

For a more complete understanding of the present invention parts, reference is now made to the following descriptions:
1000. wireless communication system.
100. The Service Management and Orchestration (SMO) framework.
200. Non-real-time radio access network intelligent controller (Non-RT-RIC).
300. Near real-time radio access network intelligent controller (Near-RT-RIC).
310. Resource configuration unit.
320. Communication unit.
330. AI/ML unit.
340. Processor.
400. Core networks (EPC/NG core).
500. Radio access network (RAN).
600. Type one network scheduler.
700. Type two network scheduler.
800-1 and 800-2. User equipments (UEs).
01. An interface.
E2. An interface.
A1. An interface.
X. Spectrum proportion.
Y. Spectrum proportion.
S400. Fow chart.
S402. An operation.
S404. An operation.
S406. An operation.
S408. An operation.
S410. An operation.

### DETAILED DESCRIPTION OF THE INVENTION

The following detailed description is of the best currently contemplated modes of carrying out exemplary embodiments of the invention. The description is not to be taken in a limiting sense, but is made merely for the purpose of illustrating the general principles of the invention.

Reference in this specification to "one embodiment" or "an embodiment" means that a particular feature, structure, or characteristic described in connection with the embodiment is included in at least one embodiment of the present technology. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

Moreover, although the following description contains many specifics for the purposes of illustration, anyone skilled in the art will appreciate that many variations and/or alterations to said details are within the scope of the present technology. Similarly, although many of the features of the present technology are described in terms of each other, or in conjunction with each other, one skilled in the art will appreciate that many of these features can be provided independently of other features. Accordingly, this description of the present technology is set forth without any loss of generality to, and without imposing limitations upon, the present technology.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

Conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without other input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

### Standard Networking Terms and Abbreviation:

RAN: A RAN may stand for radio access network. A radio access network (RAN) may be a part of a telecommunications system which may connect individual devices to other parts of a network through radio connections. A RAN may provide a connection of user equipment such as mobile phone or computer with the core network of the telecommunication systems. A RAN may be an essential part of access layer in the telecommunication systems which utilizes base stations (such as e node B , g node B) for establishing radio connections.

Wireless communication system: A wireless communication system may consist of various network components connected via wireless networks. The wireless networks may comprise of any wireless connectivity technology such as radio links, millimeter wave, etc. In this document, the wireless communication system may include one or more controller connected with radio access networks, which are further connected with a plurality of user equipments.

New RAN: A Radio Access Network which can support either NR/E-UTRA or both and have capabilities to interface with Next Generation Core Network (NG-CN). NG-C/U is a Control/User Plane interface toward NG-CN.

gNB: New Radio (NR) Base stations which have capability to interface with 5G Core named as NG-CN over NG-C/U (NG2/NG3) interface as well as 4G Core known as Evolved Packet Core (EPC) over S1-C/U interface.

LTE eNB: An LTE eNB is evolved eNodeB that can support connectivity to EPC as well as NG-CN.

Non-standalone NR: It is a 5G Network deployment configuration, where a gNB needs an LTE eNodeB as an anchor for control plane connectivity to 4G EPC or LTE eNB as anchor for control plane connectivity to NG-CN.

Standalone NR: It is a 5G Network deployment configuration where gNB does not need any assistance for connectivity to core Network, it can connect by its own to NG-CN over NG2 and NG3 interfaces.

Non-standalone E-UTRA: It is a 5G Network deployment configuration where the LTE eNB requires a gNB as anchor for control plane connectivity to NG-CN.

Standalone E-UTRA: It is a typical 4G network deployment where a 4G LTE eNB connects to EPC.

Xn Interface: It is a logical interface which interconnects the New RAN nodes i.e., it interconnects gNB to gNB and LTE eNB to gNB and vice versa.

The A1 interface may be defined as an interface between non-RT RIC and Near-RT RIC to enable policy-driven guidance of Near-RT RIC applications/functions, and support AI/ML workflow. The data packets which are communicated over the A1 interface may be called A1 messages. The E2 interface may be defined as an interface connecting the Near-RT RIC and one or more O-CU-CPs, one or more O-CU-UPs, and one or more O-DUs. The data packets which are communicated over E2 interface may be called E2 messages.

As per the O-RAN Alliance (O-RAN-WG1 OAM Architecture-v02.00), "the near real time RAN Intelligent Controller (near RT RIC) is a logical function that enables near-real-time control and optimization of O-RAN elements and resources via fine-grained data collection and actions over E2 interface. The Non-Real Time Radio Intelligent Controller (non RT RIC) is a logical function that enables non-real-time control and optimization of RAN elements and resources, AI/ML workflow including model training and updates, and policy based guidance of applications/features in near-RT RIC. It is a part of the Service Management & Orchestration Framework and communicates to the near-RT RIC using the A1 interface. Non-RT control functionality (> 1s) and near-Real Time (near-RT) control functions (< 1s) are decoupled in the RIC. Non-RT functions include service and policy management, RAN analytics and model-training for some of the near-RT RIC functionality, and non-RT RIC optimization. The xAPP is an independent software plug-in to the Near-RT RIC platform to provide functional extensibility to the RAN by third parties." The near-RT RIC controller can be provided different functionalities by using programmable modules as xAPPs, from different operators and vendors. The O1 interface is an interface between management entities in Service Management and Orchestration Framework and O-RAN managed elements, for operation and management, by which FCAPS management, Software management, File management shall be achieved. The xAPP is an independent software plug-in to the Near-RT RIC platform to provide functional extensibility to the RAN by third parties." The near-RT RIC controller can be provided different functionalities by using programmable modules as xAPPs, from different operators and vendors.

Accordingly, the present invention discloses a method and an apparatus for providing dynamic allocation of radio resources in a wireless communication system. Unlike conventional methods and systems, the method can be used to accurately allocate the bandwidth to a long term evolution (LTE) system and a New Radio system on the basis of a physical resource block (PRB) bitmap and time of arrival of bit maps from an LTE scheduler, a 5G scheduler, or combination of the LTE scheduler and the 5G scheduler without any interfere between the LTE scheduler and the 5G scheduler during a resource assignment over a time-frequency grid.

Advantageously, unlike conventional techniques, the present invention fofocuses on providing dynamic orthogonal resource (e.g., PRBs) assignment in the wireless communication system, with bitmap expression. The method and apparatus (in the first controller) allocates radio resource (PRBs) between multiple radio access technologies (such as long term evolution (LTE) system (i.e., fourth generation (4G) system) and a New Radio system (i.e., Fifth generation (5G) system)) using a physical resource block (PRB) bitmap based on at least one of spectrum sharing portion policy from the second controller, bandwidth split/allocation from bandwidth allocation unit of the first controller, a request bitmap indicating proposed PRB assignment and a protected bitmap indicating the protected RE in PRBs from schedulers of the multiple radio access technologies. Further, the protected bitmap indicated the protected RE may be the protected resource bitmap indication data. A bitmap may represent a resource block group allocated to a user equipment, i.e. the bitmap is a combination of bits allocated to a resource block group for a specific subframe number. The bitmap may actually show allocation of bandwidth for a resource block group containing multiple resource blocks. Example of bit map may be 00111111110000, which shows that allocation of resource blocks has started from resource block 3, as the 3^{rd} bit in the example bitmap is 1 and allocation gets completed at resource block 10, as 10^{th} bit is also 1, followed by 0 bits.

Consider a 100*100 matrix, on which each rows are represented as resource blocks, starting from resource block 1 to resource block 100, and columns are represented as subframe numbers. The subframe number may start from 0 and end with 9^{th} column for each system frame number (SFN), which shows 10 SFN in the 100*100 matrix, each SFN containing 10 subframe numbers. Let's say that the example bitmap 00111111110000 may start from subframe number 0 for system frame number (SFN) 10, then the bitmap may be read as: allocation from resource block 3 to resource block 9 in subframe number 0 for system frame number 10 can be used for a cell.

Further, a resource block may comprise of a plurality of resource elements (RE), each resource element being placed in individual subframe for a specific resource block (PRB). Also, all REs in each PRB pair which may be used for the reference and control signals should be protected from data transmission. These protected bits may be shown in the bitmap of REs in each PRB pair and may be known as protected bits. The protected bits may not be used during resource allocation, as it cannot be used for data communication. The available bandwidth for allocation may be calculated by reducing the total bandwidth as per the bitmap information, by the protected bits, and then the resource blocks may be allocated. The protected RE may follow repeated pattern in the resource block. In the bitmap of REs occupied by the protected signal within one PRB, each position in the bitmap may represent an RE in one PRB; value "0" may indicate "resource not protected", value "1" may indicate "resource protected ".

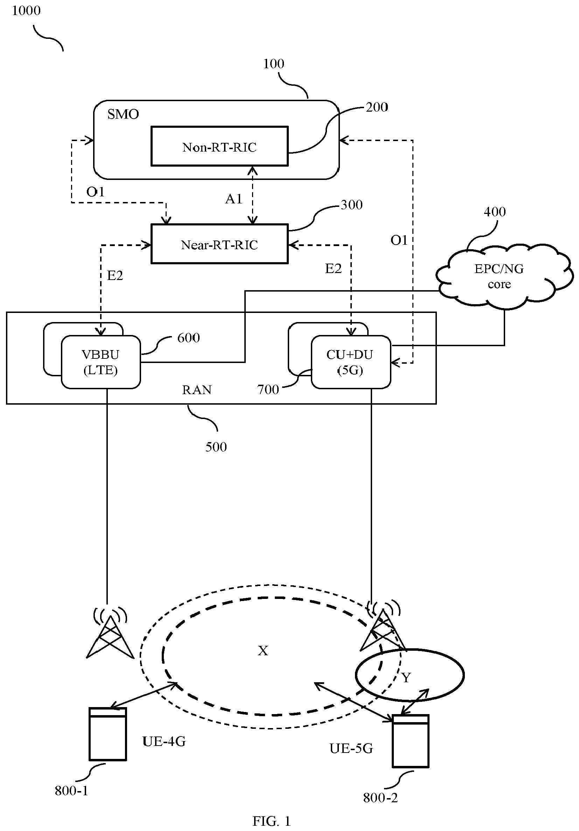

Referring now to the drawings, and more particularly to FIGS. 1 through 5, there are shown preferred embodiments.

FIG. 1 illustrates an architecture of a wireless communication system (1000). The wireless communication system (1000) may include at least one of an open-radio access network (O-RAN) architecture system, a fifth generation communication system, an LTE (Long Term Evolution) communication system, a UMTS (Universal Mobile Telecommunications Service) communication system and a GERAN/GSM (GSM EDGE Radio Access Network/ Global System for Mobile Communications) communication system.

In an implementation, the wireless communication system (1000) is the O-RAN architecture system or O-RAN. The O-RAN is an evolved version of prior radio access networks, makes the prior radio access networks more open and smarter than previous generations. The O-RAN provides real-time analytics that drive embedded machine learning systems and artificial intelligence back end modules to empower network intelligence. Further, the O-RAN includes virtualized network elements with open and standardized interfaces. The open interfaces are essential to enable smaller vendors and operators to quickly introduce their own services, or enables operators to customize the network to suit their own unique needs. Open interfaces also enable multivendor deployments, enabling a more competitive and vibrant supplier ecosystem. Similarly, open source software and hardware reference designs enable faster, more democratic and permission-less innovation.

Further, the O-RAN introduces a self-driving network by utilizing new learning based technologies to automate operational network functions. These learning based technologies make the O-RAN intelligent. Embedded intelligence, applied at both component and network levels, enables dynamic local radio resource allocation and optimizes network wide efficiency. In combination with O-RAN's open interfaces, Al-optimized closed-loop automation is a new era for network operations.

The wireless communication system (1000) includes a service management and orchestration (SMO) framework (100), a non-real-time radio access network intelligent controller (Non-RT-RIC) (200), a near real-time radio access network intelligent controller (Near-RT-RIC) (300) and a plurality of components. The plurality of components may be a radio access network (RAN) (500) comprising a plurality of network nodes such as at least a type one network scheduler (600) and a type two network scheduler (700). The plurality of components is at least one of disaggregated, reprogrammable and vendor independent. The Near-RT-RIC is a first controller (300) and comprises vendor independent APIs (Application programming interfaces) and the Non-RT-RIC is a second controller (200). The Near-RT-RIC may synonymously be called as the first controller (300) and the Non-RT-RIC may synonymously be called as the second controller (200). The network scheduler may be defined as a component of RAN which is connected to user equipments at one side and one or more controllers at the other side. The network scheduler may play an important aspect in scheduling the radio resources or resource blocks from the controller. It may enable a base station (such as e node B and g node B) to decide which user equipments (UEs) should be given resources (or resource blocks), how much resource should be given to send or receive data. A network scheduler may govern the scheduling process at per subframe basis i.e. scheduling resources at every 1 mili second. The network scheduler may perform scheduling for a 4G network as a 4G scheduler, and for a 5G network as a 5G scheduler. In the document, 4G scheduler may be considered as a first network scheduler and 5G scheduler may be considered as a second network scheduler.

The SMO framework (100) is configured to provide SMO functions/services such as data collection and provisioning services of the radio access network (RAN) (500). As per O-RAN Alliance (O-RAN-WG1 OAM Architecture-v02.00), the SMO can be defined as "Service Management and Orchestration Framework is responsible for the management and orchestration of the managed elements under its span of control. The framework can for example be a third-party Network Management System (NMS) or orchestration platform. Service Management and Orchestration Framework must provide an integration fabric and data services for the managed functions. The integration fabric enables interoperation and communication between managed functions within the O-RAN domain. Data services provide efficient data collection, storage and movement capabilities for the managed functions. In order to implement multiple OAM architecture options together with RAN service modeling, the modeling of different OAM deployment options and OAM services (integration fabric etc.) must be supported by SMO". The RAN (500), herein, may be an O-RAN node operating in the wireless communication system (1000). The RAN (500) may implement single radio access technology (RAT) or multiple RATs. The data collection of the SMO framework may include, for example, data related to a bandwidth of the plurality of network nodes (i.e. the type one network scheduler (600) and the type two network scheduler (700)) and user equipments (UEs) (800-1 and 800-2) connected to the type one network scheduler (600) and the type two network scheduler (700) respectively of the RAN (500).

The UEs (800-1 and 800-2) may be wireless devices e.g., mobile terminals, wireless terminals, terminals, and/or Mobile Stations (MS). The wireless devices may be, for example, portable, hand-held, computer-comprised, or vehicle-mounted mobile devices, enabled to communicate voice and/or data, via the RAN, with another entity, such as another terminal or a server. The UEs (800-1 and 800-2) are enabled to communicate wirelessly in a cellular communications network or wireless communication system. The communication may be performed e.g., between the UEs (800-1 and 800-2) between each UE 800-1/800-2 and the server via the RAN (500), and possibly one or more core networks (EPC/NG core) (400) comprised within the wireless communication system. The UEs (800-1 and 800-2) may be a smart phone, a laptop, a desktop, smart watch or the like.

The telecommunication network may be divided into cell areas, each cell area being served by the plurality of network nodes (600/700). The plurality of network nodes (600/700) may include, for example, an access node such as a Base Station (BS), e.g. a Radio Base Station (RBS), also referred to as e.g., evolved Node B ("eNB"),"eNodeB","NodeB","B node", gNB, or BTS (Base Transceiver Station), depending on the technology and terminology used. For example, the type one network scheduler (600) may be eNB, herein, that supports 4G/Long term evolution (LTE) RAT and the type two network scheduler (700) may be gNB, herein, that supports 5G/NR RAT or vice-versa. In other words, the type one network scheduler (600) may be a 4G scheduler, eNB and the type two network scheduler (700) may be a 5G scheduler, gNB.

Advantageously, the present invention is focussed towards providing an optimal solution towards issue of the radio resource/spectrum sharing between the plurality of network nodes (such as the type one network scheduler (600) and the type two network scheduler (700)) supporting different RATs (4G and 5G).

Referring back to the SMO (100), which includes the Non-RT-RIC (200) that may be configured to support intelligent RAN optimization in non-real-time. Further, the Non-RT-RIC (200) can be configured to leverage the SMO services. As described earlier, that the focus of the present invention is to provide efficient/enhanced spectrum allocation which is achieved by the intellectualization offered by the Near-RT-RIC (300). The Near-RT-RIC (300) has the characteristic of intellectualization that can utilize artificial intelligence (AI)/ Machine learning (ML) technology to carry out services such as prediction, reasoning and the like.

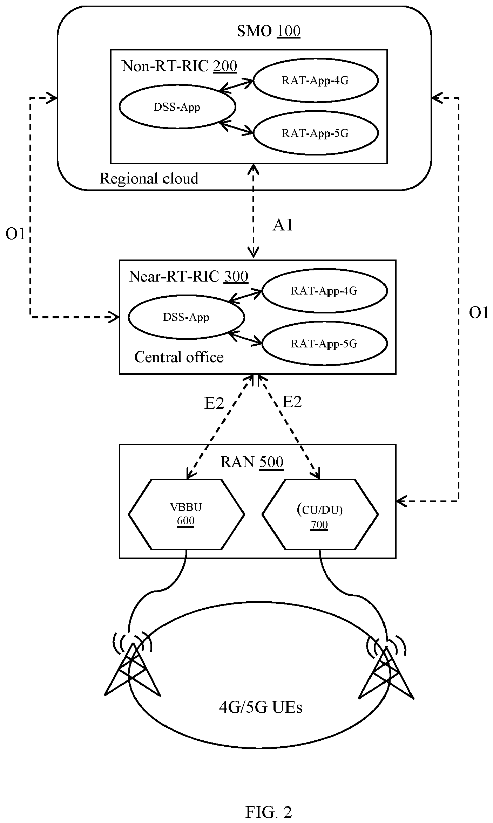

One example of spectrum sharing can be dynamic spectrum sharing (DSS) that may be implemented at both the Non-RT-RIC (200) and the Near-RT-RIC (300), as shown in FIG. 2. The DSS, herein, is considered is an example, as such other spectrum sharing mechanism(s) may be implemented in accordance with the present invention.

Further, the Near-RT-RIC (300) may host xApps, for example, DSS-App that is configured to provide the spectrum proportion (X and Y, in FIG. 1) to be shared between the type one network scheduler (600) and the type two network scheduler (700) using RAT-App-5G and RAT-App-4G, respectively. The xApps (at the Near-RT-RIC (300)) uses an "E2" interface to collect near real-time RAN (500) information and to provide value added services using these primitives, guided by the policies/configuration and the enrichment data provided by an "A1" interface from the xApps at the Non-RT-RIC (200). An "01" interface collects data for training in the Non-RT RIC (200) (integrated with SMO (100)).

Unlike conventional DSS, where the RAN implements a local computational process for computing a proportion of the radio resources to be shared at each network node supporting different RAT, respectively, the present invention therefore implements a centralized DSS using the wireless communication system (1000).

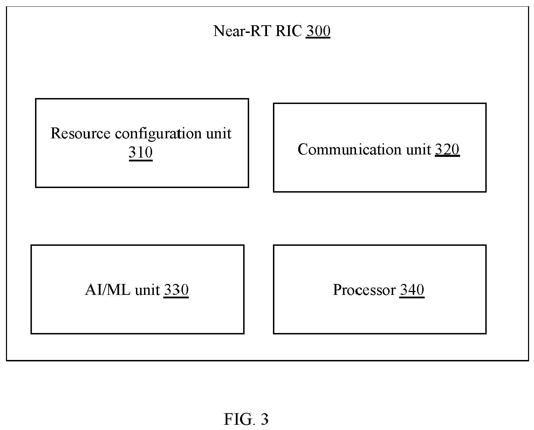

FIG. 3 illustrates various hardware elements in the Near-RT-RIC (300) i.e. the first controller. The Near-RT-RIC (300) may include a resource configuration unit (310), a communication unit (320), an AI/ML unit (330) and a processor (340). The processor (340) is coupled with the resource configuration unit (310), the communication unit (320) and the AI/ML unit (330) and may be configured to process information shared among the hardware elements in the Near-RT-RIC i.e. the first controller (300).

The communication unit (320) may be configured to receive a dynamic spectrum sharing (DSS) policy configuration message from the second controller (200). The DSS policy configuration message may include a resource allocation proportion between the type one network scheduler (600) and the type two network scheduler (700). In other words, the dynamic spectrums sharing (DSS) policy configuration message may include details specifying certain proportion of resource sharing between 5G and 4G systems on a shared band, e.g., 40% of the resources for 5G and 60% for 4G. The DSS policy configuration message may be a default configuration provided by the vendor. The DSS policy configuration may be computed by a controller. The DSS policy configuration may be part of a non-real time radio intelligent controller (RIC), which may provide a DSS policy configuration message to the near real-time RIC for resource allocation to different network schedulers. The near real-time RIC may also provide different parameters to non real-time RIC for modifying the DSS policy. DSS policy may be dynamically updated based on periodic or real-time traffic requirements.

Further, the communication unit (320) may be configured to receive a physical resource block (PRB) assignment bitmap proposal and a protected bitmap indication data from the type one network scheduler (600) and the type two network scheduler (700). In general, the protected bitmap is continuously exchanged between the plurality of network nodes and the Near-RT-RIC (300) in the wireless communication system (1000). As a standard definition, the physical resource block (PRB) may be a smallest unit of frequency or bandwidth that can be allocated to a user. The physical resource block (or resource block) may typically 180 kHz wide in frequency and 1 slot long in time. In frequency, resource blocks may be either 12 x 15 kHz subcarriers or 24 x 7.5 kHz subcarriers wide. The number of subcarriers used per resource block for most channels and signals may be 12 subcarriers. Radio assignments in the telecommunication system may be achieved using allocation of physical resource blocks.

The plurality of periodic report messages, may be received from the network scheduler by the plurality of controllers in the RAN. These periodic reports may be received on regular intervals by the plurality of controllers and include multiple parameters defining traffic related parameters, resource demand, resource deficits. Resource demand may show resource allocation requirement by the UEs at network scheduler, while resource deficit denotes utilization of current or previous resources by the UEs. The traffic related parameters may signifie requests from a plurality of UEs connected with the network schedulers for allocation of physical resource blocks (PRBs). The plurality of UEs periodically may send request for PRBs to the network scheduler which processes the requests and transmits the processed requests and parameters to the controllers. A buffer report which signifies traffic reports from the network scheduler may include the bitmap PRB assignment configuration. The bitmap PRB assignment configuration may signifie traffic size, bitmap information on the resource blocks, requested bitmap from the UEs based on resource requirement at specific time frames (system frame numbers and subframe numbers at UE end), proposed PRB based on protected bitmap information, current system frame number which denotes position of current resource blocks and elements being used by the UEs through network scheduler.

The key performance indicators of UEs and associated cells, received in periodic reports by the controllers, from the network scheduler, may denote current performance of UEs and associated cells based on previous and current resource allocation by the network scheduler. With this information, controller may receive the information related to performance of the UE and understands what UE may require precisely. The KPI along with periodic reports basically may inform the controller about the current traffic, expected traffic data, performance data, and resource utilization which helps the controller in determining expected requirements by the UE and network scheduler for better performance and efficient utilization of radio resources.

Furthermore, the communication unit (320) may be configured to receive a plurality of traffic parameters from the type one network scheduler (600) and the type two network scheduler (700). The plurality of traffic parameters may include a current buffer demand and one or more traffic arrival information, each from the type one network scheduler and the type two network scheduler.

The communication unit (320) may include a transmitter (not shown) and a receiver (not shown), an interface component(s) supporting plurality of interfaces (such as "A1", "O1", and any other supporting interface, represented as dotted lines in the FIG. 1). The communication unit (320) may be implemented, for example, in form of software layers that may be executed on a cloud computing platforms/systems. The communication unit (320) may be configured to communicate with the SMO (100) to avail the SMO services.

In another aspect, the communication unit (320) may be configured to communicate [with] "or" receive the data collection and provisioning services of the RAN (500) from the SMO (100). The data collection, as described above, may include data such as key performance indicators (KPIs) related to the bandwidth of the plurality of network nodes and the UEs (800-1 and 800-2) connected to the plurality of network nodes.

The interface component(s) of the communication unit (320) supports "E2" interface (represented as dotted lines in the FIG. 1) in addition to the plurality of interfaces (such as "A1" and "01") supported by a communication unit of the Non-RT-RIC (200). The "E2" interface may be used to communicate the singling information/messages between the RAN (500) and the Near-RT-RIC (300).

The resource configuration unit (310) is communicatively coupled with the communication unit (320). The resource configuration unit (310) may be configured to compute an available bandwidth based on the PRB assignment bitmap proposal and the protected bitmap indication data. The protected bitmap indication data is a protected bitmap resource indication data, which may signify the protected bits not available for allocation. Based on the computed available bandwidth and the DSS policy configuration message from the type one network scheduler (600) and the type two network scheduler (700), a bandwidth allocation for the type one network scheduler (600) and the type two network scheduler (700) is computed by the resource configuration unit (310). In addition to this, the resource configuration unit (310) may also take into consideration the plurality of traffic parameters for computing the bandwidth allocation. The plurality of traffic parameters may be used for calculating the current PRB demand. The plurality of traffic parameters may be further used for predicting the PRB demand for next TTIs. The predicted demand and the protected bitmap resource indication data may be used for computing the bandwidth allocation to the type one network scheduler (600) and the type two network scheduler (700), by the first controller (300). The next TTI may be an immediate next transmission time interval (TTI) to the current TTI. The plurality of traffic paramters may include a traffic arrival information. The traffic arrival information may include per TTI arrivals. The TTI may be defined as the time unit for the network scheduler (such as eNodeB or gNodeB) to schedule uplink and downlink data transmissions. The TTI may be a parameter related to encapsulation of data from higher layers into frames for transmission on the radio link layer. TTI may refer to the duration of a transmission on the radio link. The TTI may be related to the size of the data blocks passed from the higher network layers to the radio link layer. Further, the traffic parameters may include a current PRB buffer value. The current PRB buffer value may also be called current buffer demand. The current buffer value may be defined as the amount of traffic waiting to be transmitted in a current buffer. The initial buffered demand may be utilized by the RAN controller while determining the bandwidth demand for the network schedulers during the second time interval. Further, the first transmission time interval may be a continuous transmission time intervals (TTIs). The received atleast one traffic arrival information and buffer value may be in unit of PRB per TTIs, which covers a possibility of receiving the traffic arrival information in unit of PRB per multiple TTIs. In one embodiment, the transmission time interval (TTI) and transmission time intervals (TTIs) may be used alternatively. Further, the transmission time intervals (TTIs) may mean one or more TTIs. Similarly the buffer demand, and average deficit may be received in unit of PRB per TTI. In another aspect, the buffer demand may be received in unit of PRB per multiple TTIs (PRB per TTIs). That is, the resource configuration unit (310) computes the bandwidth allocation for the type one network scheduler (600) and the type two network scheduler (700) based on the received plurality of traffic parameters, the PRB assignment bitmap proposal, the protected bitmap indication data and the DSS policy configuration message.

In an implementation, the DSS configuration policy message may be dynamically updated by the resource configuration unit (310) based on the computed bandwidth allocation to the type one network scheduler (600) and the type two network scheduler (700). Herein, the DSS policy configuration message corresponds to one or more operator policies on bandwidth proportion weights for allocation of bandwidth to the type one network scheduler (600) and the type two network scheduler (700).

Accordingly, the resource configuration unit (310) allocates the computed bandwidth to the type one network scheduler (600) and the type two network scheduler (700). The resource configuration unit (310) allocates the computed bandwidth in such a way that the bandwidth allocated to the type one network scheduler (600) and the type two network scheduler (700) are orthogonal to each other.

In an aspect, the resource configuration unit (310) may allocate the computed bandwidth in accordance with proportion to the current buffer demand from the type one network scheduler and the type two network scheduler, if a sum of the current buffer demand from the type one network scheduler and the second network is lesser than the computed available bandwidth.

Alternatively, the resource configuration unit (310) may allocate the computed bandwidth corresponding to a weighted proportion of bandwidth allocation according to the DSS policy configuration message, if the current buffer demand from each of the type one network scheduler and the type two network scheduler is greater than the weighted proportion of bandwidth allocation according to the DSS policy configuration message for the type one network scheduler (600) and the type two network scheduler (700).

In case, if the current buffer demand from the type one network scheduler is lesser than the weighted proportion of bandwidth allocation and the current buffer demand from the type one network scheduler is greater than the weighted proportion of bandwidth allocation according to the DSS policy configuration message, a part of the computed available bandwidth equal to the current buffer demand from the type one network scheduler is allocated by the resource configuration unit (310) (i.e., first controller (300)) to the type one network scheduler (600). Further, a remaining available bandwidth is allocated to the type two network scheduler (700) after allocating to the type one network scheduler (600).

On the other hand, if the current buffer demand from the type two network scheduler is lesser than the weighted proportion of bandwidth allocation and the current buffer demand from the type two network scheduler is greater than the weighted proportion of bandwidth allocation according to the policy configuration message, a part of the computed available bandwidth equal to the current buffer demand from the type two network scheduler is allocated to the type two network scheduler (700). Further, a remaining available bandwidth after allocating to the type two network scheduler (700) is allocated to the type one network scheduler (600) by the resource configuration unit (310) (i.e., first controller (300)).

In an example, the remaining bandwidth is computed by subtracting the part of allocated bandwidth from the computed available bandwidth.

In this way, the resource configuration unit (310), thus the Near-RT-RIC (300), implements the bitmap based dynamic resource allocation in the wireless communication system (1000) to precisely assign orthogonal PRBs coded as Bitmap vector for both a base station associated with the LTE system and a base station associated with the NR system in each sub-frame every next transmission time interval (TTI).

In short, the resource configuration unit (310) is configured to determine available bandwidth based on the received PRB assignment bitmap proposal and the protected bitmap indication data. The resource configuration unit (310) is configured to determine a bandwidth percentage allocated to the plurality of the network nodes for a TTI. In one aspect, determining the bandwidth percentage allocated to the plurality of the network nodes for the TTI includes determining one of a reference signal (RS) and a control channel configuration (CCC) and determining the bandwidth percentage allocated to the plurality of the network nodes for the TTI based on the determined RS and the determined CCC. The CCC is one of an antenna configuration change or a Physical Downlink Control Channel (PDCCH) configuration change. The resource configuration unit (310) is configured to allocate a resource based on the determined bandwidth percentage allocated to the plurality of the network nodes and the computed available bandwidth. The resource is the physical resource block (PRB).

The AI/ML unit (330) may be configured to implement machine learning/artificial intelligence technologies to generate and deploy machine learning models/prediction models to assist the resource configuration unit (310) for prediction of load/traffic requirement of the RAN (500). For example, in some aspects, the plurality of traffic parameters, the PRB assignment bitmap proposal, the protected bitmap indication data and the DSS policy configuration message may be transmitted to the resource configuration unit (310) as an input and the AI/ML unit (330) may assist the resource configuration unit (310) to identify the demand and to allocate bandwidth to the plurality of network nodes based on the demand. The AI/ML unit (330) may be configured to assist the resource configuration unit (310) in such a way that enhances the bandwidth allocation and/or to effectively manage the interoperability interference. Further, the AI/ML unit (330) may control the real time behaviour of the RAN (500) and may assist the resource configuration unit (310) to dynamically allocate the radio resources in the wireless communication system (1000) through a continuous sequence of allocations.

In this way, the resources (PRBs) are assigned using bit vectors format between the multiple radio access technologies in a centralized manner.

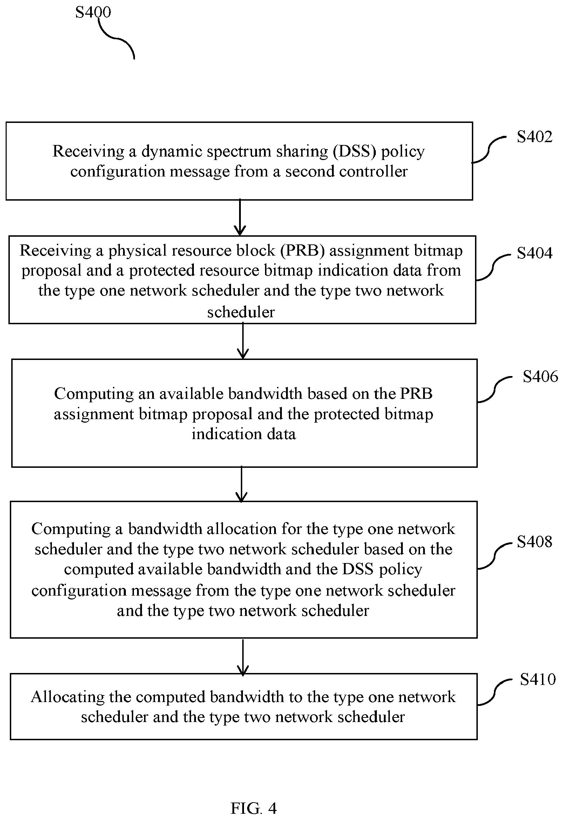

FIG. 4 is a flow chart (S400) illustrating a method for dynamic allocation of radio resources in the wireless communication system (1000). The operations (S402-S410) are performed by the first controller i.e., Near-RT-RIC (300).

At S402, the method includes receiving the dynamic spectrum sharing (DSS) policy configuration message from the second controller (200). The DSS policy configuration message comprises the resource allocation proportion between the type one network scheduler (600) and the type two network scheduler (700).

At S404, the method includes receiving the physical resource block (PRB) assignment bitmap proposal and the protected bitmap indication data from the type one network scheduler (600) and the type two network scheduler (700).

At S406, the method includes computing the available bandwidth based on the PRB assignment bitmap proposal and the protected bitmap indication data.

At S408, the method includes computing the bandwidth allocation for the type one network scheduler (600) and the type two network scheduler (700) based on the computed available bandwidth and the DSS policy configuration message from the type one network scheduler and the type two network scheduler.

At S410, the method includes allocating the computed bandwidth to the type one network scheduler (600) and the type two network scheduler (700).

The various actions, acts, blocks, steps, or the like in the flow chart (S400) may be performed in the order presented, in a different order or simultaneously. Further, in some embodiments, some of the actions, acts, blocks, steps, or the like may be omitted, added, modified, skipped, or the like without departing from the scope of the invention.

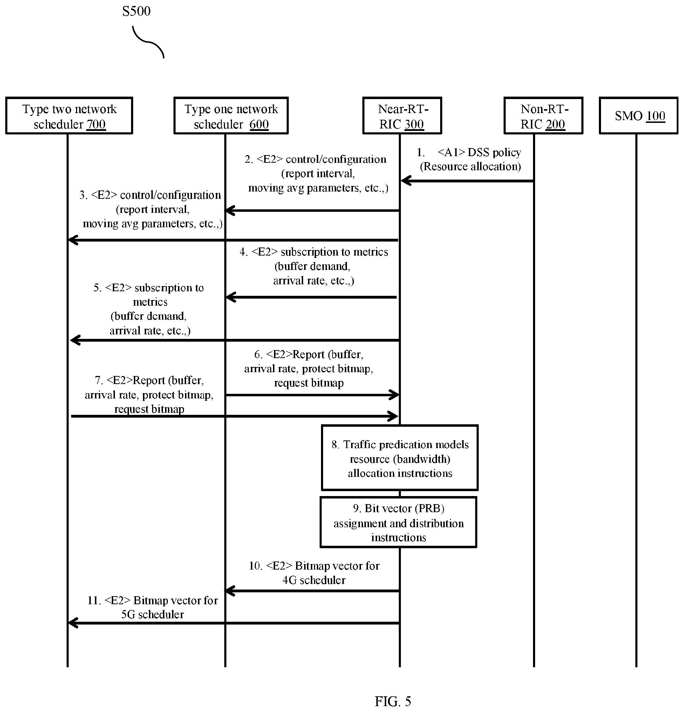

FIG. 5 is a sequence diagram (S500) depicting dynamic allocation of the radio resources in the wireless communication system (1000).

At step 1, the second controller (Non-RT-RIC) (200) may transmit, over the "A1" interface, the DSS policy configuration message to the first controller (Near-RT-RIC) (300).

At steps 2 and 3, the first controller (Near-RT-RIC) (300) may transmit, over the "E2" interface, the control/configuration (report interval, moving average parameters, etc.) to the type one network scheduler (600) and the type two network scheduler (700).

At steps 4 and 5, the first controller (Near-RT-RIC) (300) may transmit, over the "E2" interface, subscription to metrics (buffer demand, arrival rate, etc.,) to the type one network scheduler (600) and the type two network scheduler (700).

At steps 6 and 7, the first controller (Near-RT-RIC (300)) may receive, over the "E2" interface, the physical resource block (PRB) assignment bitmap proposal and the protected bitmap indication data from the type one network scheduler (600) and the type two network scheduler (700).

At step 8, the first controller (Near-RT-RIC) (300) may be configured to generate the traffic prediction models (using the AI/ML unit (330)). Further, at step 9, the first controller (Near-RT-RIC) (300) may be configured to encode the PRB assignment using a bit vector.

At steps 10 and 11, the first controller (Near-RT-RIC) (300) may be configured to transmit/distribute/allocate, over the "E2" interface, bandwidth (bitmap vector) for each of the type one network scheduler (600) and the type two network scheduler (700).

The embodiments disclosed herein can be implemented using at least one software program running on at least one hardware device and performing network management functions to control the elements.

In one aspect of the invention, the method provides orthogonal assignment of radio resources based on available bandwidth in the bitmap. The radio resource allocation is not implemented efficiently and accurately as required by the network scheduler, if the protected bit indication is not taken into consideration while allocating resources. The protected bits are not used for data transmission and hence are required to be avoided while allocating resource blocks to the network scheduler. The available bandwidth, computed by the controller, is allocated based on the DSS policy configuration and provides only the useful part of resource blocks to the network schedulers, which further helps in avoiding inaccurate allocation of bandwidth to the network schedulers.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention. It is intended that the specification and examples be considered as exemplary, with the true scope of the invention being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or nonvolatile memory (e.g., magnetic disk storage, optical storage, EEPROM and/or solid state RAM).

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. A computing environment can include any type of computer system, including, but not limited to, a computer system based on a microprocessor, a mainframe computer, a digital signal processor, a portable computing device, a device controller, or a computational engine within an appliance, to name a few.

The elements of a method, process, routine, or algorithm described in connection with the embodiments disclosed herein can be embodied directly in hardware, in a software module executed by a processor device, or in a combination of the two. A software module can reside in RAM memory, flash memory, ROM memory, EPROM memory, EEPROM memory, registers, hard disk, a removable disk, a CD-ROM, or any other form of a non-transitory computer-readable storage medium. An exemplary storage medium can be coupled to the processor device such that the processor device can read information from, and write information to, the storage medium. In the alternative, the storage medium can be integral to the processor device. The processor device and the storage medium can reside in an ASIC. The ASIC can reside in a user terminal. In the alternative, the processor device and the storage medium can reside as discrete components in a user terminal.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Although the present disclosure has been explained in relation to its preferred embodiment(s) as mentioned above, it is to be understood that many other possible modifications and variations can be made without departing from the spirit and scope of the inventive aspects of the present invention. It is, therefore, contemplated that the appended claim or claims will cover such modifications and variations that fall within the true scope of the invention.

The invention also includes the following embodiments represented by numbered clauses:
1. A method for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the method comprising:
   receiving, by a first controller (300) from a second controller (200), a dynamic spectrum sharing (DSS) policy configuration message, wherein the DSS policy configuration message comprising a resource allocation proportion between the type one network scheduler (600) and the type two network scheduler (700);
   receiving, by the first controller (300) from the type one network scheduler (600) and the type two network scheduler (700), a physical resource block (PRB) assignment bitmap proposal and a protected bitmap indication data;
   computing, by the first controller (300), an available bandwidth based on the PRB assignment bitmap proposal and the protected bitmap indication data;
   computing, by the first controller (300), a bandwidth allocation for the type one network scheduler (600) and the type two network scheduler (700) based on the computed available bandwidth and the DSS policy configuration message from the type one network scheduler and the type two network scheduler; and
   allocating, by the first controller (300), the computed bandwidth to the type one network scheduler (600) and the type two network scheduler (700).
2. The method of clause 1 further comprising:
   receiving, by the first controller (300) from the type one network scheduler (600) and the type two network scheduler (700), a plurality of traffic parameters, wherein the plurality of traffic parameters includes a current buffer demand and one or more traffic arrival information, each from the type one network scheduler and the type two network scheduler;
   computing, by the first controller (300), the bandwidth allocation for the type one network scheduler (600) and the type two network scheduler (700) based on the received plurality of traffic parameters.
3. The method of any preceding clause, wherein at least one of:
   the first controller (300) is a near-real-time RAN intelligent controller,
   the second controller (200) is a non-real-time RAN intelligent controller,
   the type one network scheduler (600) is a 4G scheduler, eNB,
   the type two network scheduler (700) is a 5G scheduler, gNB.
4. The method of any preceding clause further comprising:
   receiving, by the first controller (300) from the type one network scheduler (600) and the type two network scheduler (700), the plurality of traffic parameters, wherein the plurality of traffic parameters includes the current buffer demand, and one or more traffic arrival information, each from the type one network scheduler and the type two network scheduler; and
   allocating, by the first controller (300) to the type one network scheduler (600) and the type two network scheduler (700), the computed bandwidth in accordance with proportion to the current buffer demand from the type one network scheduler and the type two network scheduler, if a sum of the current buffer demand from the type one network scheduler and the second network is lesser than the computed available bandwidth.
5. The method of any preceding clause further comprising:
   receiving, by the first controller (300) from the type one network scheduler (600) and the type two network scheduler (700), the plurality of traffic parameters, wherein the plurality of traffic parameters includes the current buffer demand, and one or more traffic arrival information, each from the type one network scheduler and the type two network scheduler, wherein the current buffer demand and the one or more traffic arrival information predicts a PRB demand for next TTIs; and
   allocating, by the first controller (300) to the type one network scheduler (600) and the type two network scheduler (700), the computed bandwidth in accordance with proportion to the current buffer demand and the predicted PRB demand for next TTIs from the type one network scheduler and the type two network scheduler, if a sum of the current buffer demand and predicted PRB demand for next TTIs, from the type one network scheduler and the second network is lesser than the computed available bandwidth.
6. The method of any preceding clause further comprising:
   receiving, by the first controller (300) from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler; and
   allocating, by the first controller (300) to the type one network scheduler (600) and the type two network scheduler (700), the computed bandwidth corresponding to a weighted proportion of bandwidth allocation according to the DSS policy configuration message, if the current buffer demand from each of the type one network scheduler and the type two network scheduler is greater than the weighted proportion of bandwidth allocation according to the DSS policy configuration message for the type one network scheduler and the type two network scheduler.
7. The method of any preceding clause further comprising:
   receiving, by the first controller (300) from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler;
   allocating, by the first controller (300) to the type one network scheduler (600), a part of the computed available bandwidth equal to the current buffer demand from the type one network scheduler, if the current buffer demand from the type one network scheduler is lesser than the weighted proportion of bandwidth allocation and the current buffer demand from the type one network scheduler is greater than the weighted proportion of bandwidth allocation according to the DSS policy configuration message; and
   allocating, by the first controller (300) to the type two network scheduler (700), a remaining available bandwidth after allocating to the type one network scheduler (600), the remaining bandwidth is computed by subtracting the part of allocated bandwidth from the computed available bandwidth.
8. The method of any preceding clause further comprising:
   receiving, by the first controller (300) from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler;
   allocating, by the first controller (300) to the type two network scheduler (700), a part of the computed available bandwidth equal to the current buffer demand from the type two network scheduler, if the current buffer demand from the type two network scheduler is lesser than the weighted proportion of bandwidth allocation and the current buffer demand from the type two network scheduler is greater than the weighted proportion of bandwidth allocation according to the policy configuration message; and
   allocating, by the first controller (300) to the type one network scheduler (600), a remaining available bandwidth after allocating to the type two network scheduler (700), the remaining bandwidth is computed by subtracting the part of allocated bandwidth from the computed available bandwidth.
9. The method of any preceding clause, wherein the DSS policy configuration message corresponds to one or more operator policies on bandwidth proportion weights for allocation of bandwidth to the type one network scheduler (600) and the type two network scheduler (700).
10. The method of any preceding clause further comprising:
   dynamically updating, by the first controller (300), the DSS configuration policy message based on the computed bandwidth allocation to the type one network scheduler (600) and the type two network scheduler (700).
11. The method of any preceding clause, wherein the wireless communication system (1000) is an open-radio access network (O-RAN) architecture system, wherein the O-RAN architecture system includes the non-real-time RAN intelligent controller, the near real-time RAN intelligent controller and a plurality of components, wherein the plurality of components is at least one of: disaggregated, reprogrammable and vendor independent,
   wherein the near real-time RAN intelligent controller comprises vendor independent APIs (Application programming interfaces),
   wherein the near real-time RAN intelligent controller is the first controller (300) and the non-real-time RAN intelligent controller is the second controller (200).
12. The method of any preceding clause, wherein the bandwidth allocated to the type one network scheduler (600) and the type two network scheduler (700) are orthogonal to each other.
13. The method of any preceding clause, wherein the wireless communication system (1000) includes at least one of: the O-RAN architecture system, a fifth generation communication system, an LTE (Long Term Evolution) communication system, a UMTS (Universal Mobile Telecommunications Service) communication system and a GERAN/GSM (GSM EDGE Radio Access Network/ Global System for Mobile Communications) communication system.
14. The method as claimed in claim 1, wherein the protected bitmap is continuously exchanged between the plurality of network nodes and the near real-time RAN intelligent controller in the wireless communication system (1000).
15. A first controller (300) for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the first controller (300) is configured to:
   receive, from a second controller (200), a dynamic spectrum sharing (DSS) policy configuration message, wherein the DSS policy configuration message comprising a resource allocation proportion between the type one network scheduler (600) and the type two network scheduler (700);
   receive, from the type one network scheduler (600) and the type two network scheduler (700), a physical resource block (PRB) assignment bitmap proposal and a protected bitmap indication data;
   compute an available bandwidth based on the PRB assignment bitmap proposal and the protected bitmap indication data;
   compute a bandwidth allocation for the type one network scheduler (600) and the type two network scheduler (700) based on the computed available bandwidth and the DSS policy configuration message from the type one network scheduler and the type two network scheduler; and
   allocate the computed bandwidth to the type one network scheduler (600) and the type two network scheduler (700).
16. The first controller (300) of clause 15 further configured to:
   receive, from the type one network scheduler (600) and the type two network scheduler (700), a plurality of traffic parameters, wherein the plurality of traffic parameters includes a current buffer demand and one or more traffic arrival information, each from the type one network scheduler and the type two network scheduler; and
   compute the bandwidth allocation for the type one network scheduler (600) and the type two network scheduler (700) based on the received plurality of traffic parameters.
17. The first controller (300) of clause 15 or 16, wherein at least one of:
   the first controller (300) is a near-real-time RAN intelligent controller,
   the second controller (200) is a non-real-time RAN intelligent controller,
   the type one network scheduler (600) is a 4G scheduler, eNB,
   the type two network scheduler (700) is a 5G scheduler, gNB.
18. The first controller (300) of any one of clauses 15 to 17 further configured to:
   receive, from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler; and
   allocate, to the type one network scheduler (600) and the type two network scheduler (700), the computed bandwidth in accordance with proportion to the current buffer demand from the type one network scheduler and the type two network scheduler, if a sum of the current buffer demand from the type one network scheduler and the second network is lesser than the computed available bandwidth.
19. The first controller (300) of any one of clauses 15 to 18 further configured to:
   receive, from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler wherein the current buffer demand and the one or more traffic arrival information predicts a PRB demand for next TTIs; and
   allocate, to the type one network scheduler (600) and the type two network scheduler (700), the computed bandwidth in accordance with proportion to the current buffer demand and the predicted PRB demand for next TTIs from the type one network scheduler and the type two network scheduler, if a sum of the current buffer demand from the type one network scheduler and the second network is lesser than the computed available bandwidth.
20. The first controller (300) of any one of clauses 15 to 19 further configured to:
   receive, from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler; and
   allocate, to the type one network scheduler (600) and the type two network scheduler (700), the computed bandwidth corresponding to a weighted proportion of bandwidth allocation according to the DSS policy configuration message, if the current buffer demand from each of the type one network scheduler and the type two network scheduler is greater than the weighted proportion of bandwidth allocation according to the DSS policy configuration message for the type one network scheduler and the type two network scheduler.
21. The first controller (300) of any one of clauses 15 to 20 further configured to:
   receive, from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler;
   allocate, to the type one network scheduler (600), a part of the computed available bandwidth equal to the current buffer demand from the type one network scheduler, if the current buffer demand from the type one network scheduler is lesser than the weighted proportion of bandwidth allocation and the current buffer demand from the type one network scheduler is greater than the weighted proportion of bandwidth allocation according to the DSS policy configuration message; and
   allocate, to the type two network scheduler (700), a remaining available bandwidth after allocating to the type one network scheduler (600), the remaining bandwidth is computed by subtracting the part of allocated bandwidth from the computed available bandwidth.
22. The first controller (300) of any one of clauses 15 to 21 further configured to:
   receive, from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler;
   allocate, to the type two network scheduler (700), a part of the computed available bandwidth equal to the current buffer demand from the type two network scheduler, if the current buffer demand from the type two network scheduler is lesser than the weighted proportion of bandwidth allocation and the current buffer demand from the type two network scheduler is greater than the weighted proportion of bandwidth allocation according to the policy configuration message; and
   allocate, to the type one network scheduler (600), a remaining available bandwidth after allocating to the type two network scheduler (700), the remaining bandwidth is computed by subtracting the part of allocated bandwidth from the computed available bandwidth.
23. The first controller (300) of any one of clauses 15 to 22, wherein the DSS policy configuration message corresponds to one or more operator policies on bandwidth proportion weights for allocation of bandwidth to the type one network scheduler (600) and the type two network scheduler (700).
24. The first controller (300) of any one of clauses 15 to 23 further configured to:
   dynamically update the DSS configuration policy message based on the computed bandwidth allocation to the type one network scheduler (600) and the type two network scheduler (700).
25. The first controller (300) of any one of clauses 15 to 24, wherein the wireless communication system (1000) is an open-radio access network (O-RAN) architecture system, wherein the O-RAN architecture system includes the non-real-time RAN intelligent controller, the near real-time RAN intelligent controller and a plurality of components, wherein the plurality of components is at least one of: disaggregated, reprogrammable and vendor independent,
   wherein the near real-time RAN intelligent controller comprises vendor independent APIs (Application programming interfaces),
   wherein the near real-time RAN intelligent controller is the first controller (300) and the non-real-time RAN intelligent controller is the second controller (200).
26. The first controller (300) of any one of clauses 15 to 25, wherein the bandwidth allocated to the type one network scheduler (600) and the type two network scheduler (700) are orthogonal to each other.
27. The first controller (300) of any one of clauses 15 to 26, wherein the wireless communication system (1000) includes at least one of: the O-RAN architecture system, a fifth generation communication system, an LTE (Long Term Evolution) communication system, a UMTS (Universal Mobile Telecommunications Service) communication system and a GERAN/GSM (GSM EDGE Radio Access Network/ Global System for Mobile Communications) communication system.
28. The first controller (300) of any one of clauses 15 to 27, wherein the protected bitmap is continuously exchanged between the plurality of network nodes and the near real-time RAN intelligent controller in the wireless communication system (1000).

## Claims

1. A method for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the method comprising:
receiving, by a first controller (300) from a second controller (200), a dynamic spectrum sharing (DSS) policy configuration message, wherein the DSS policy configuration message comprising a resource allocation proportion between the type one network scheduler (600) and the type two network scheduler (700);
receiving, by the first controller (300) from the type one network scheduler (600) and the type two network scheduler (700), a physical resource block (PRB) assignment bitmap proposal and a protected bitmap indication data;
computing, by the first controller (300), an available bandwidth based on the PRB assignment bitmap proposal and the protected bitmap indication data;
computing, by the first controller (300), a bandwidth allocation for the type one network scheduler (600) and the type two network scheduler (700) based on the computed available bandwidth and the DSS policy configuration message from the type one network scheduler and the type two network scheduler; and
allocating, by the first controller (300), the computed bandwidth to the type one network scheduler (600) and the type two network scheduler (700).

2. The method as claimed in claim 1 further comprising:
receiving, by the first controller (300) from the type one network scheduler (600) and the type two network scheduler (700), a plurality of traffic parameters, wherein the plurality of traffic parameters includes a current buffer demand and one or more traffic arrival information, each from the type one network scheduler and the type two network scheduler;
computing, by the first controller (300), the bandwidth allocation for the type one network scheduler (600) and the type two network scheduler (700) based on the received plurality of traffic parameters.

3. The method as claimed in claim 1 or 2, wherein at least one of:
the first controller (300) is a near-real-time RAN intelligent controller,
the second controller (200) is a non-real-time RAN intelligent controller,
the type one network scheduler (600) is a 4G scheduler, eNB,
the type two network scheduler (700) is a 5G scheduler, gNB.

4. The method as claimed in any preceding claim further comprising:
receiving, by the first controller (300) from the type one network scheduler (600) and the type two network scheduler (700), the plurality of traffic parameters, wherein the plurality of traffic parameters includes the current buffer demand, and one or more traffic arrival information, each from the type one network scheduler and the type two network scheduler; and
allocating, by the first controller (300) to the type one network scheduler (600) and the type two network scheduler (700), the computed bandwidth in accordance with proportion to the current buffer demand from the type one network scheduler and the type two network scheduler, if a sum of the current buffer demand from the type one network scheduler and the second network is lesser than the computed available bandwidth.

5. The method as claimed in any one of claims 1 to 3 further comprising:
receiving, by the first controller (300) from the type one network scheduler (600) and the type two network scheduler (700), the plurality of traffic parameters, wherein the plurality of traffic parameters includes the current buffer demand, and one or more traffic arrival information, each from the type one network scheduler and the type two network scheduler, wherein the current buffer demand and the one or more traffic arrival information predicts a PRB demand for next TTIs; and
allocating, by the first controller (300) to the type one network scheduler (600) and the type two network scheduler (700), the computed bandwidth in accordance with proportion to the current buffer demand and the predicted PRB demand for next TTIs from the type one network scheduler and the type two network scheduler, if a sum of the current buffer demand and predicted PRB demand for next TTIs, from the type one network scheduler and the second network is lesser than the computed available bandwidth.

6. The method as claimed in any one of claims 1 to 3 further comprising:
receiving, by the first controller (300) from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler; and
allocating, by the first controller (300) to the type one network scheduler (600) and the type two network scheduler (700), the computed bandwidth corresponding to a weighted proportion of bandwidth allocation according to the DSS policy configuration message, if the current buffer demand from each of the type one network scheduler and the type two network scheduler is greater than the weighted proportion of bandwidth allocation according to the DSS policy configuration message for the type one network scheduler and the type two network scheduler.

7. The method as claimed in any one of claims 1 to 3 further comprising:
receiving, by the first controller (300) from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler;
allocating, by the first controller (300) to the type one network scheduler (600), a part of the computed available bandwidth equal to the current buffer demand from the type one network scheduler, if the current buffer demand from the type one network scheduler is lesser than the weighted proportion of bandwidth allocation and the current buffer demand from the type one network scheduler is greater than the weighted proportion of bandwidth allocation according to the DSS policy configuration message; and
allocating, by the first controller (300) to the type two network scheduler (700), a remaining available bandwidth after allocating to the type one network scheduler (600), the remaining bandwidth is computed by subtracting the part of allocated bandwidth from the computed available bandwidth.

8. The method as claimed in any one of claims 1 to 3 further comprising:
receiving, by the first controller (300) from the type one network scheduler (600) and the type two network scheduler (700), the plurality of traffic parameters, wherein the plurality of traffic parameters includes the current buffer demand and one or more traffic arrival information, each from the type one network scheduler and the type two network scheduler;
allocating, by the first controller (300) to the type two network scheduler (700), a part of the computed available bandwidth equal to the current buffer demand from the type two network scheduler, if the current buffer demand from the type two network scheduler is lesser than the weighted proportion of bandwidth allocation and the current buffer demand from the type two network scheduler is greater than the weighted proportion of bandwidth allocation according to the policy configuration message; and
allocating, by the first controller (300) to the type one network scheduler (600), a remaining available bandwidth after allocating to the type two network scheduler (700), the remaining bandwidth is computed by subtracting the part of allocated bandwidth from the computed available bandwidth.

9. The method as claimed any preceding claim, wherein the DSS policy configuration message corresponds to one or more operator policies on bandwidth proportion weights for allocation of bandwidth to the type one network scheduler (600) and the type two network scheduler (700).

10. The method as claimed in any preceding claim further comprising:
dynamically updating, by the first controller (300), the DSS configuration policy message based on the computed bandwidth allocation to the type one network scheduler (600) and the type two network scheduler (700).

11. The method as claimed in any preceding claim, wherein the wireless communication system (1000) is an open-radio access network (O-RAN) architecture system, wherein the O-RAN architecture system includes the non-real-time RAN intelligent controller, the near real-time RAN intelligent controller and a plurality of components, wherein the plurality of components is at least one of: disaggregated, reprogrammable and vendor independent,
wherein the near real-time RAN intelligent controller comprises vendor independent APIs (Application programming interfaces),
wherein the near real-time RAN intelligent controller is the first controller (300) and the non-real-time RAN intelligent controller is the second controller (200).

12. The method as claimed in any preceding claim, wherein the bandwidth allocated to the type one network scheduler (600) and the type two network scheduler (700) are orthogonal to each other.

13. The method as claimed in any preceding claim, wherein the wireless communication system (1000) includes at least one of: the O-RAN architecture system, a fifth generation communication system, an LTE (Long Term Evolution) communication system, a UMTS (Universal Mobile Telecommunications Service) communication system and a GERAN/GSM (GSM EDGE Radio Access Network/ Global System for Mobile Communications) communication system.

14. The method as claimed in any preceding claim, wherein the protected bitmap is continuously exchanged between the plurality of network nodes and the near real-time RAN intelligent controller in the wireless communication system (1000).

15. A first controller (300) for providing dynamic allocation of radio resources in a wireless communication system (1000), the wireless communication system (1000) comprising a radio access network (RAN) (500), the RAN (500) comprising a plurality of network nodes, the plurality of network nodes comprising at least a type one network scheduler (600) and a type two network scheduler (700), the first controller (300) is configured to:
receive, from a second controller (200), a dynamic spectrum sharing (DSS) policy configuration message, wherein the DSS policy configuration message comprising a resource allocation proportion between the type one network scheduler (600) and the type two network scheduler (700);
receive, from the type one network scheduler (600) and the type two network scheduler (700), a physical resource block (PRB) assignment bitmap proposal and a protected bitmap indication data;
compute an available bandwidth based on the PRB assignment bitmap proposal and the protected bitmap indication data;
compute a bandwidth allocation for the type one network scheduler (600) and the type two network scheduler (700) based on the computed available bandwidth and the DSS policy configuration message from the type one network scheduler and the type two network scheduler; and
allocate the computed bandwidth to the type one network scheduler (600) and the type two network scheduler (700).
